# EUROPÄISCHE PATENTANMELDUNG

(11) **EP 2 851 323 A1**
(43) Veröffentlichungstag der Anmeldung: **25.03.2015**
(21) Anmeldenummer: 14179859.5
(22) Anmeldetag: 05.08.2014
(51) Int. Cl.: B65H 39/06, B65H 29/12

(54) **Vorrichtung und Verfahren zur Erzeugung von Postsendungen**

(30) Priorität: 10.09.2013 DE 102013109937; 12.05.2014 DE 102014106655
(71) Anmelder: BÖWE SYSTEC GmbH, 86159 Augsburg (DE)
(72) Erfinder: Kudrus, Heiner, 86199 Augsburg (DE)
(74) Vertreter: Charrier, Rapp & Liebau

(57) **Zusammenfassung**

Die Erfindung betrifft ein Verfahren und eine Vorrichtung zur Erzeugung von Postsendungen mit
-einem linear ausgebildeten ersten Zufuhrkanal (3) zur Zufuhr von ersten Dokumente (a) einer Postsendung, mit einer ersten Transporteinrichtung (3a), welche die ersten Dokumenten (a) entlang einer ersten Transportrichtung (v1) längs einer ersten Transportgeraden (G1) transportiert,
- einer Identifikationseinrichtung zum Identifizieren der ersten Dokumente (a),
- einem zweiten Zufuhrkanal (4) zur Zufuhr von zweiten Dokumenten (b) einer Postsendung,
- einer Identifikationseinrichtung zum Identifizieren der zweiten Dokumente (b),
-einem stromabwärts des ersten Zufuhrkanals (3) und stromabwärts des zweiten Zufuhrkanals (4) angeordneten Sammelkanal (7) zur Aufnahme von ersten Dokumenten (a) oder Gruppen von ersten Dokumenten aus dem ersten Zufuhrkanal (3) und/oder von zweiten Dokumenten (b) oder Gruppen von zweiten Dokumenten aus dem zweiten Zufuhrkanal (4), wobei die im Sammelkanal (7) aufgenommenen Dokumente als Dokumentengruppe (S) gesammelt werden, wobei jede Dokumentengruppe (S) den Inhalt einer Postsendung bildet,
- einer stromabwärts des Sammelkanal (7) angeordneten Kuvertiereinrichtung (10), in der die vom Sammelkanal (7) kommenden Dokumentengruppen (S) in ein Kuvert eingefügt werden.

Um einen höheren Durchsatz von erzeugten Postsendungen zu erzielen, lenkt die zweite Transporteinrichtung (4a) die zweiten Dokumente (b) ohne Anhalten der Dokumente von einer zweiten Transportrichtung (v2) längs einer zweiten Transportgeraden (G2) in eine dritte Transportrichtung (v3) längs einer dritten Transportgeraden (G3) um.

## Beschreibung

Die Erfindung betrifft eine mehrkanalige Vorrichtung zur Erzeugung von Postsendungen sowie ein Verfahren zur Erzeugung von Postsendungen in einer solchen mehrkanaligen Vorrichtung.

Eine mehrkanalige Anlage zur Verarbeitung von Drucksachen, insbesondere eine mehrkanalige Kuvertieranlage ist aus der EP 1 997 646 A2 bekannt. Diese Anlage umfasst eine erste Zuführeinrichtung und eine zweite Zuführeinrichtung sowie eine Handlingstation. Die beiden Zuführeinrichtungen weisen jeweils einen linearen Transportkanal für Drucksachen auf, wobei der Transportkanal der ersten Zuführeinrichtung und der Transportkanal der zweiten Zuführeinrichtung abschnittsweise senkrecht zueinander angeordnet sind. Stromabwärts des Transportkanals der ersten Zuführeinrichtung ist in linearer Verlängerung des Transportkanals dieser Zuführeinrichtung eine Zusammenführstation angeordnet, in der die vom Transportkanal der ersten Zuführeinrichtung und die vom Transportkanal der zweiten Zuführeinrichtung kommenden Drucksachen zusammengeführt werden. Stromabwärts der Zusammenführstation ist wenigstens eine Beilagenstation angeordnet, in der den Drucksachen zugeordnete Beilagen hinzugefügt werden können. An die Beilagenstation(en) schließt sich eine Einkuvertierstation an, in der die in der Zusammenführstation in Gruppen bzw. Stapeln gesammelten Dokumente, ggf. zusammen mit den in den Beilagenstation hinzugefügten Beilagen, in ein Kuvert eingefügt werden. Sowohl der ersten Zuführeinrichtung als auch der zweiten Zuführeinrichtung ist jeweils eine Lesestation zugeordnet, mit der den Drucksachen zugeordnete Information ausgelesen und als Signale einer Anlagensteuerung zugeführt werden. Die Anlagensteuerung steuert die Anlage und insbesondere den Transport der Drucksachen von den beiden Zuführeinrichtungen zu der Einkuvertierstation gemäß den ausgelesenen Informationen.

Die bekannte Anlage erweist sich hinsichtlich ihrer Effizienz und ihres Durchsatzes als nachteilig, weil für das Zusammenführen der Drucksachen aus dem Transportkanal der ersten Zuführeinrichtung mit den Drucksachen aus dem Transportkanal der zweiten Zuführeinrichtung der Transport der Drucksachen (taktweise) unterbrochen werden muss, damit die Drucksachen aus der ersten Zuführeinrichtung mit den Drucksachen aus der zweiten Zuführeinrichtung in der Zusammenführstation zusammengeführt werden können. Durch das getaktete Anhalten des Transports der Drucksachen im Transportkanal der ersten Zuführeinrichtung bzw. im Transportkanal der zweiten Zuführeinrichtung und das anschließende Anfahren des Transports der Drucksachen in der Zusammenführstation vermindert sich die Durchlaufgeschwindigkeit und damit der Durchsatz der Anlage. Durch die abschnittsweise rechtwinklige Anordnung der Transportkanäle der ersten Zuführeinrichtung und der zweiten Zuführeinrichtung ist es nämlich erforderlich, die Bewegungsrichtung der aus dem Transportkanal der einen Zuführeinrichtung kommenden Drucksachen um 90° umzulenken, was ein Abstoppen des Transports der aus dieser Zuführeinrichtung kommenden Drucksachen erfordert.

Der Erfindung liegt die Aufgabe zugrunde, eine Vorrichtung und ein Verfahren zur Erzeugung von Postsendungen aufzuzeigen, mit denen ein höherer Durchsatz von erzeugten Postsendungen erzielt werden kann. Es soll dabei eine synchrone Verarbeitung von Dokumenten (insbesondere Drucksachen) aus zwei oder mehr Zufuhrkanälen ermöglicht werden.

Diese Aufgaben werden mit einer Vorrichtung mit den Merkmalen des Anspruchs 1, sowie mit einem Verfahren mit den Merkmalen des Anspruchs 10 gelöst. Bevorzugte Ausführungsformen der Vorrichtungen und des Verfahrens sind den abhängigen Ansprüchen zu entnehmen.

Die erfindungsgemäße Vorrichtung zur Erzeugung von Postsendungen umfasst
- einen linear ausgebildeten ersten Zufuhrkanal zur Zufuhr von ersten Dokumenten einer Postsendung, mit einer ersten Transporteinrichtung, welche die ersten Dokumente entlang einer ersten Transportrichtung längs einer ersten Transportgeraden transportiert,
- einer Identifikationseinrichtung zum Identifizieren der ersten Dokumente,
- einem zweiten Zufuhrkanal zur Zufuhr von zweiten Dokumenten einer Postsendung,
- einer Identifikationseinrichtung zum Identifizieren der zweiten Dokumente,
- einem stromabwärts des ersten Zufuhrkanals und stromabwärts des zweiten Zufuhrkanals angeordneten Sammelkanal zur Aufnahme von ersten Dokumenten oder Gruppen von ersten Dokumenten aus dem ersten Zufuhrkanal und/oder von zweiten Dokumenten oder Gruppen von zweiten Dokumenten aus dem zweiten Zufuhrkanal, wobei die im Sammelkanal aufgenommenen Dokumente als Dokumentengruppe gesammelt werden, wobei jede Dokumentengruppe den Inhalt einer Postsendung bildet,
- einer stromabwärts des Sammelkanal angeordneten Kuvertiereinrichtung, in der die vom Sammelkanal kommenden Dokumentengruppen in ein Kuvert eingefügt werden.

Erfindungsgemäß ist die zweite Transporteinrichtung so eingerichtet, dass sie die zweiten Dokumente ohne Anhalten der Dokumente von einer zweiten Transportrichtung längs einer zweiten Transportgeraden in eine dritte Transportrichtung längs einer dritten Transportgeraden umlenkt.

Hierfür transportiert die zweite Transporteinrichtung die zweiten Dokumente zunächst zumindest abschnittsweise linear in einer horizontalen Lage längs der zweiten Transportgeraden und bringt die zweiten Dokumente in eine zumindest im Wesentlichen vertikale Lage, um sie in der vertikalen Lage dann von der zweiten Transportrichtung in die dritte Transportrichtung umzulenken und schließlich wieder zurück in eine horizontale Lage zu drehen.

In einem Ausführungsbeispiel sind die zweite Transportgerade und/oder die dritte Transportgerade parallel und im Abstand zur ersten Transportgeraden und die zweite und die dritte Transportgerade verlaufen im Wesentlichen parallel zueinander. Um die zweiten Dokumente von der zweiten Transportrichtung in die dritte Transportrichtung umzulenken, werden die Dokumente in dieser Ausführungsform in ihrer vertikalen Lage zunächst ein erstes mal ausgehend von der zweiten Transportrichtung um einen um Umlenkwinkel von bevorzugt mehr als. 90° und insb. um ca. 120° umgelenkt und in dieser Richtung eine vorgegebene Wegstrecke in Richtung auf den ersten Zufuhrkanal weiter bewegt und dann ein zweites mal um denselben Umlenkwinkel umgelenkt und in der dritten Transportrichtung weiter bewegt, so dass die zweiten Dokumente dann im Wesentlichen längs der dritten Transportgeraden und parallel zur ersten Transportrichtung (also der Transportrichtung der ersten Dokumente) weiter transportiert werden. Die dritte Transportgerade verläuft dabei oberhalb und im vertikalen Abstand zur ersten Transportgeraden, längs derer die ersten Dokumente transportiert werden.

Zum Zusammenführen der ersten Dokumente und der zweiten Dokumente im Sammelkanal ist dieser zweckmäßig linear und als Verlängerung des ersten Zufuhrkanals ausgebildet und verläuft längs der ersten Transportgeraden. Die zweiten Dokumente werden schließlich über eine rampenförmige Transportstrecke von der dritten Transportrichtung schräg nach unten auf den Sammelkanal geleitet und dort mit den ersten Dokumenten oder Dokumentengruppen von ersten Dokumenten zusammen geführt, um mit diesen eine den Inhalt einer Postsendung bildende Dokumentengruppe auszubilden.

In einem bevorzugten Ausführungsbeispiel umfasst die zweite Transporteinrichtung ein verdrehtes Transportband, welches die zweiten Dokumente in Eingriff nimmt, um sie von der horizontalen Lage in eine zumindest im Wesentlichen vertikale Lage und wieder zurück in ihre horizontale Lage zu bringen. Zweckmäßig handelt es sich bei dem Transportband um einen verschränkten Riemen mit zwei benachbarten Bändern, zwischen denen die zweiten Dokumente in Eingriff genommen werden.

Die Identifikationseinrichtung dient zum Identifizieren der ersten Dokumente und der zweiten Dokumente und ist bspw. durch Leseeinrichtungen gebildet, welche auf den Dokumenten aufgebrachte Information über deren Identität auslesen kann, die ggf. in Klarschrift oder auch in Form von Codes vorhanden ist. Zweckmäßig ist eine dem ersten Zufuhrkanal zugeordnete erste Leseeinrichtung zum Lesen der ersten Dokumente und eine dem zweiten Zufuhrkanal zugeordnete zweite Leseeinrichtung zum Lesen der zweiten Dokumente vorgesehen. Es ist jedoch auch möglich, die Identität der ersten Dokumente und der zweiten Dokumente statt durch Leseeinrichtungen über den Rückgriff auf eine Datenbank fest zu stellen, welche Angaben zur Identität sämtlicher Dokumente enthält, insbesondere in Bezug auf ihre Zugehörigkeit zu den ersten bzw. zweiten Dokumenten und ihre Zugehörigkeit zu einer bestimmten Postsendung.

In einem Ausführungsbeispiel ist in der erfindungsgemäßen Vorrichtung dem ersten Zufuhrkanal eine erste Sammelstation zugeordnet, welche die ersten Dokumente zu Gruppen von ersten Dokumenten gruppiert. Entsprechend kann auch dem zweiten Zufuhrkanal eine zweite Sammelstation zugeordnet sein, welche die zweiten Dokumente zu Gruppen von zweiten Dokumenten gruppiert. Die in dem Sammelkanal gesammelten Dokumentengruppen (S), welche eine Postsendung bilden, enthalten dabei jeweils erste Dokumente und zweite Dokumente, wobei die ersten Dokumente und die zweiten Dokumente verschieden sind.

Das erfindungsgemäße Verfahren zur Erzeugung von Postsendungen umfasst damit folgende Schritten:
- Zufuhr von ersten Dokumenten oder einer Gruppe von ersten Dokumenten längs eines ersten Zufuhrkanals,
- Identifizieren wenigstens eines der ersten Dokumente mit einer Identifikationseinrichtung, insbesondere mit einer dem ersten Zufuhrkanal zugeordneten Leseeinrichtung,
- Zufuhr von zweiten Dokumenten oder einer Gruppen von zweiten Dokumenten entlang eines zweiten Zufuhrkanals,
- Identifizieren wenigstens eines der zweiten Dokumente mit einer Identifikationseinrichtung, insbesondere mit einer dem zweiten Zufuhrkanal zugeordneten Leseeinrichtung,
- Übergabe der ersten Dokumente oder der Gruppen von ersten Dokumenten von dem ersten Zufuhrkanal auf einen stromabwärts des ersten Zufuhrkanals angeordneten Sammelkanal ohne Anhalten der ersten Dokumente,
- Übergabe der zweiten Dokumente oder der Gruppen von zweiten Dokumenten von dem zweiten Zufuhrkanal auf den stromabwärts des zweiten Zufuhrkanals angeordneten Sammelkanal ohne Anhalten der zweiten Dokumente, wobei die im Sammelkanal aufgenommenen Dokumente als Dokumentengruppe gesammelt werden, jede Dokumentengruppe den Inhalt einer Postsendung bildet und erste Dokumente und/oder zweite Dokumente enthält,
- Weiterleiten der Dokumentengruppe in dem Sammelkanal an eine stromabwärts des Sammelkanal angeordnete Kuvertiereinrichtung,
- in der Kuvertiereinrichtung Einfügen der vom Sammelkanal kommenden Dokumentengruppe in ein Kuvert zur Bildung einer Postsendung.

In dem erfindungsgemäßen Verfahren werden die ersten Dokumente und die zweiten Dokumente in den Zufuhrkanälen und in dem Sammelkanal bevorzugt bis zur Übergabe an die Kuvertiereinrichtung ohne Anhalten der Dokumente transportiert. Dies gewährleistet, dass die Dokumente von den Zufuhrkanälen bis zur Kuvertiereinrichtung ohne Unterbrechung des Transports in einem kontinuierlichen Dokumentenstrom transportiert werden können, wodurch sich der Durchsatz des Verfahrens wesentlich erhöhen lässt.

Diese und weitere Vorteile der Erfindung ergeben sich aus dem nachfolgend unter Bezugnahme auf die begleitenden Zeichnungen beschriebenen Ausführungsbeispiel. Die Zeichnungen zeigen:
- **Fig. 1:**: eine erfindungsgemäße Vorrichtung in einer Draufsicht;
- **Fig. 2:**: perspektivische Seitenansicht der Zufuhrkanäle der Vorrichtung von Figur 1;
- **Fig. 3:**: perspektivische Draufsicht der Zufuhrkanäle der Vorrichtung von Figur 1,
- **Fig. 4:**: perspektivische Vorderansicht der Zufuhrkanäle der Vorrichtung von Figur 1;

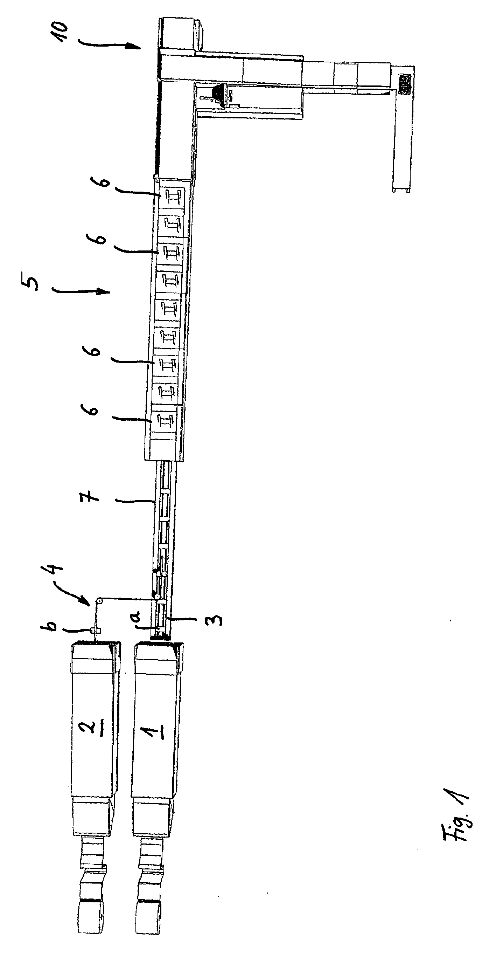

In Fig. 1 ist ein Ausführungsbeispiel einer erfindungsgemäßen Vorrichtung zur Erzeugung von Postsendungen in einer Draufsicht gezeigt. Bei dieser Vorrichtung handelt es sich um eine zweikanalige Anlage mit einer Kuvertiereinrichtung 10. Der Kuvertiereinrichtung 10 werden zwei Dokumentenströme zugeführt. Hierfür weist die Vorrichtung eine erste Zufuhrstation 1 und eine zweite Zufuhrstation 2 auf. In den beiden Zufuhrstationen 1, 2 werden die der Kuvertiereinrichtung 10 zugeführten Dokumentenströme erzeugt und zusammengestellt. Jeder Dokumentenstrom besteht dabei bspw. aus bedruckten Blättern, bei denen es sich insbesondere um personalisierte Dokumente unterschiedlicher Art und/oder unterschiedlichen Formats handeln kann. Die beiden Zufuhrstationen 1, 2 können bspw. zur Erzeugung und Zusammenstellung der Dokumentenströme Drucker, Schneider, Merger oder Blattanleger umfassen. Weiterhin kann jede der Zufuhrstationen 1, 2 eine oder mehrere Sammelstationen aufweisen, um Dokumente in Gruppen zu sammeln und bspw. als Dokumentenstapel zu gruppieren. Zum Transport der Dokumente bzw. der Gruppen von Dokumenten enthält jede Zufuhrstation 1, 2 eine Transporteinrichtung. Weiterhin können die Zufuhrstationen 1, 2 Einrichtungen zum Falzen von Dokumenten (insbesondere von bedruckten Blättern) oder von Gruppen von Dokumenten sowie Dreheinrichtungen zum Drehen der Dokumente enthalten. Ferner ist in jeder Zufuhrstation 1, 2 eine Leseeinrichtung angeordnet, mit der die transportierten Dokumente während des Transports ausgelesen werden können. Zweckmäßig handelt es sich bei den Leseeinrichtungen um eine Leseeinrichtung zum Auslesen von Codes, wie z. B. Barcodes oder QR-Codes, welche auf den Dokumenten angebracht sind. Es kann sich bei den Leseeinrichtungen jedoch auch um Scanner handeln, welche einen auf den Dokumenten aufgebrachten Text einscannen und mittels einer Texterkennungseinrichtung erfassen und verarbeiten können. Die mittels der Leseeinrichtungen ausgelesenen Informationen werden zur Steuerung der Vorrichtung und insbesondere für die Zusammenstellung von Gruppen von Dokumenten in den Zufuhrstationen 1 und 2 verwendet.

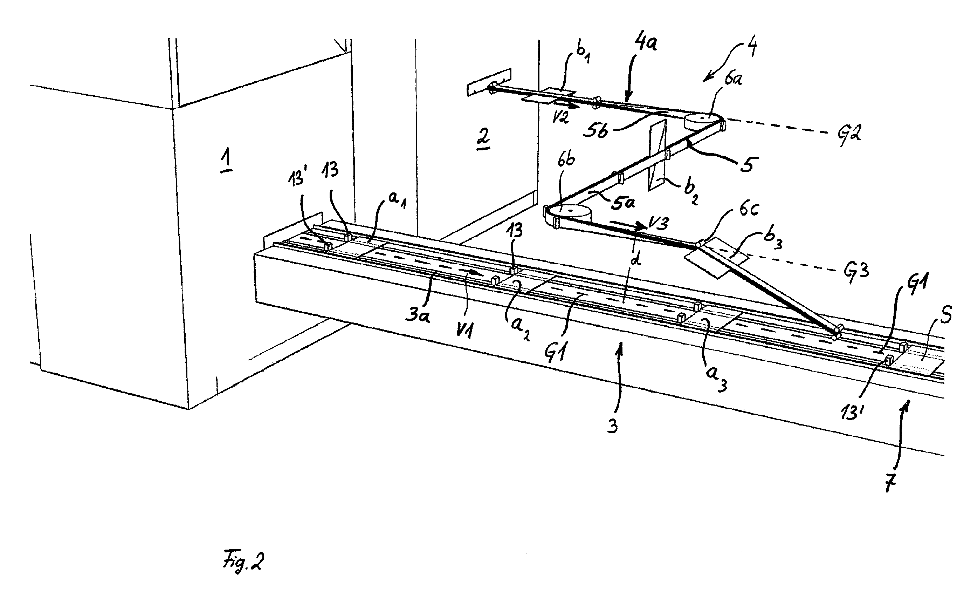

Die in den Zufuhrstationen 1, 2 erzeugten bzw. verarbeiteten Dokumente oder Gruppen von Dokumenten werden in den Zufuhrstationen 1, 2 mit einer Transporteinrichtung in einer Transportrichtung gefördert, wobei die einzelnen Dokumente bzw. Gruppen von Dokumenten auf der Transporteinrichtung in geringem Abstand zueinander in Transportrichtung aufliegen und dadurch einen Dokumentenstrom bilden. Über die Transporteinrichtung werden die Dokumentenströme von der jeweiligen Zufuhrstation 1, 2 zu einem stromabwärts der jeweiligen Zufuhrstation 1, 2 angeordneten Zufuhrkanal 3, 4 transportiert und auf den jeweils zugeordneten Zufuhrkanal 3 bzw. 4 übergeben. Bei dem Zufuhrkanal 3 handelt es sich um einen linearen Transportkanal, welcher die ihm von der zugeordneten Zufuhrstation 1 übergebenen Dokumentenströme von ersten Dokumenten a längs einer ersten Transportgeraden G1 in einer ersten Transportrichtung v1 transportiert (Figur 2). Hierfür ist der erste Zufuhrkanal 3 mit einer Transporteinrichtung 3a, bspw. einem angetriebenem Transportband oder Transportrollen oder, wie in Figur 2 gezeigt, mit angetriebenen Mitnehmern 13 ausgestattet. Die von der ersten Zufuhrstation 1 seriell geförderten ersten Dokumente a werden in horizontaler Lage auf den ersten Zufuhrkanal 3 übergeben und von der Transporteinrichtung 3a linear in der ersten Transportrichtung v1 weiter transportiert.

An die zweite Zufuhrstation 2 schließt sich stromabwärts der zweite Zufuhrkanal 4 an, der die von der zweiten Zufuhrstation 2 seriell geförderten zweiten Dokumente b in einer horizontalen Lage übernimmt und zunächst zumindest abschnittsweise in einer zweiten Transportrichtung v2 entlang einer zweiten Transportgeraden G2 linear weiter transportiert und anschließend die zweiten Dokumente b in eine dritte Transportrichtung v3 entlang einer dritten Transportgeraden G3 umlenkt (Figur 2). Die dritte Transportgerade G3 liegt mit der zweiten Transportgeraden G2 in einer Ebene und verläuft dabei, wie aus Figur 2 ersichtlich, zumindest im Wesentlichen parallel und in einem vertikalen Abstand d zur ersten Transportgeraden G1.

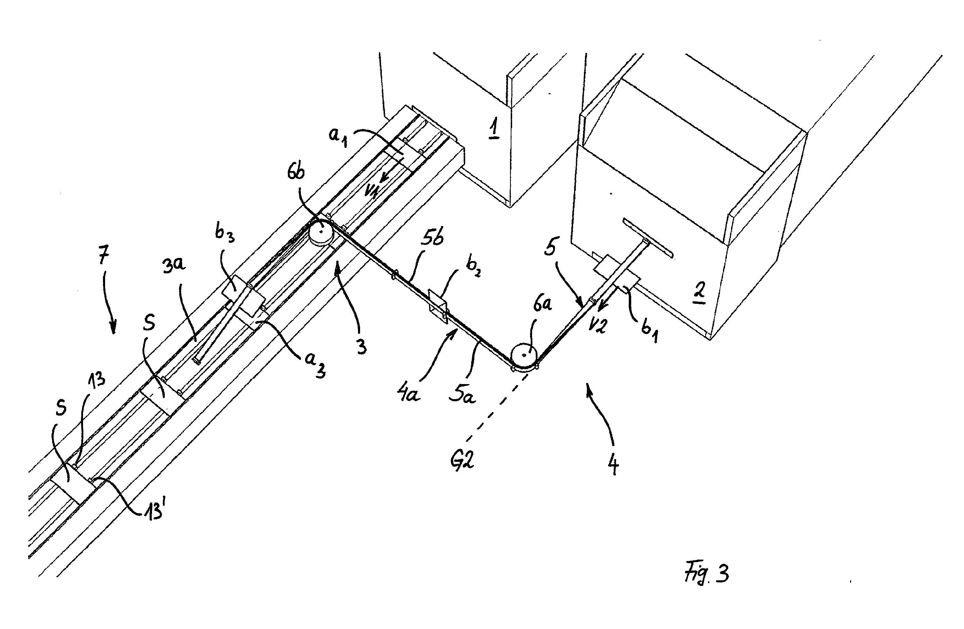

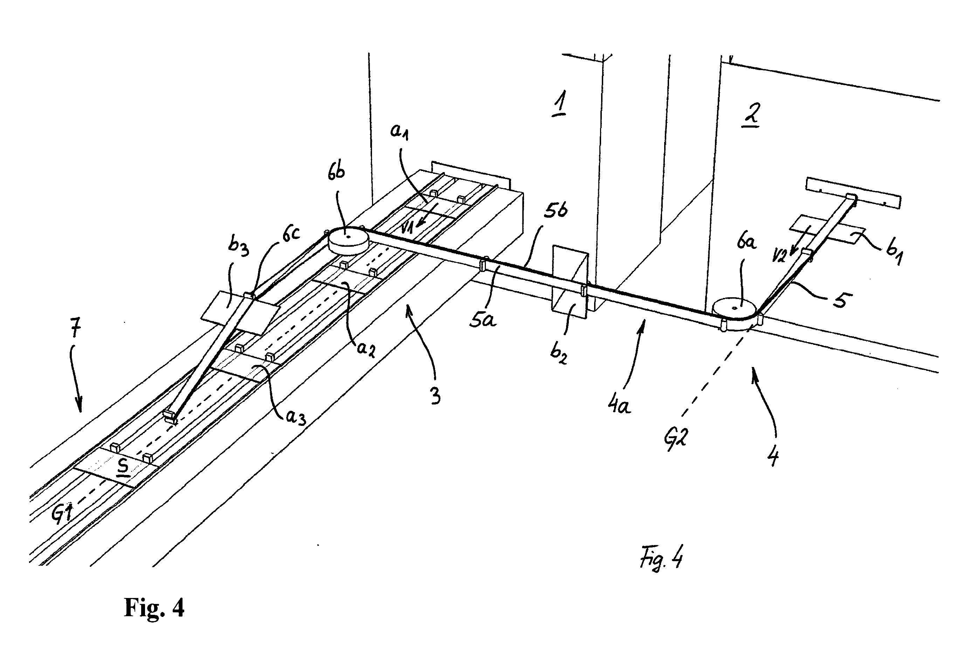

Am Ende des ersten Zufuhrkanals 3 ist ein Sammelkanal 7 angeordnet. Bei dem in den Figuren 1 bis 4 gezeigten Ausführungsbeispiel wird der Sammelkanal 7 durch eine Verlängerung des ersten Zufuhrkanals 3 in der ersten Transportrichtung v1 (entlang der ersten Transportgeraden G1) gebildet, so dass der Sammelkanal kolinear zum ersten Zufuhrkanal 3 verläuft. Dem Sammelkanal 7 werden die Dokumentenströme (erste Dokumente a) aus der ersten Zufuhrstation 1 und die Dokumentenströme (zweite Dokumente b) aus der zweiten Zufuhrstation 2 zugeführt, ohne dass die Dokumente dabei angehalten werden. Die zugeführten Dokumente oder Gruppen von Dokumenten werden ohne Anhalten an den Sammelkanal 7 übergeben und in dem Sammelkanal 7 zu Dokumentengruppen S gruppiert und gesammelt. Zweckmäßig werden die Dokumentengruppen S in dem Sammelkanal 7 zu Dokumentenstapeln aufgestapelt. Dabei ist es auch möglich, in einzelnen Zyklen lediglich selektiv entweder nur erste Dokumente a aus dem ersten Zufuhrkanal 3 oder nur zweite Dokumente b aus dem zweiten Zufuhrkanal 4 an den Sammelkanal 7 zu übergeben, so dass eine Dokumentengruppe (Dokumentenstapel) S nur aus ersten Dokumenten a oder nur aus zweiten Dokumenten b gebildet wird. Hierfür kann ggf. die Transporteinrichtung 3a des ersten Zufuhrkanals 3 oder die Transporteinrichtung 4a des zweiten Zufuhrkanals 4 (getaktet) angehalten werden, so dass in diesem Taktzyklus kein Dokument aus diesem Zufuhrkanal an den Sammelkanal 7 übergeben wird. Es ist hierfür auch möglich, die ersten bzw. die zweiten Dokumente verzögert oder mit Lücken aus den Eingangskanälen 1 und 2 an den jeweils zugeordneten Zufuhrkanal 3 bzw. 4 zu übergeben, so dass in einem Zufuhrkanal 3 oder 4 entsprechende Lücken im Dokumentenstrom entstehen. In diesem Fall ist es möglich, die Transporteinrichtungen 3a bzw. 4a der Zufuhrkanäle 3 bzw. 4 im kontinuierlichen Betrieb weiter laufen zu lassen.

Bei den ersten Dokumenten a des Dokumentenstroms, der aus der ersten Zufuhrstation 1 kommt und den zweiten Dokumenten b des Dokumentenstroms, der aus der zweiten Zufuhrstation 2 kommt, handelt es sich in der Regel um individualisierte Dokumente. Es wird deshalb im Folgenden von ersten Dokumenten a bzw. Gruppen von ersten Dokumenten und von zweiten Dokumenten b bzw. Gruppen von zweiten Dokumenten gesprochen, wobei die ersten Dokumente a aus der ersten Zufuhrstation 1 und die zweiten Dokumente b aus der zweiten Zufuhrstation 2 kommen. Aufgrund des Auslesens von Dokumenteninformationen mittels der Leseeinrichtungen ist die Identität der einzelnen Dokumente der beiden Dokumentenströme bekannt und damit die Integrität der Dokumente sichergestellt, so dass die Steuereinrichtung der Vorrichtung den Transport der einzelnen Dokumente a, b und deren Gruppierung in Dokumentengruppen (bzw. Dokumentenstapel) S entsprechend den ausgelesenen Informationen steuern kann.

Stromabwärts des Sammelkanal 7 ist eine Zusammentragbahn 5 mit mehreren Beilagenanlegern 6 angeordnet. In der Zusammentragbahn 5 können den Dokumenten bzw. den Gruppen von Dokumenten, die von dem Sammelkanal 7 übergeben werden, zugeordnete Beilagen hinzugefügt werden. Die Beilagen befinden sich dabei in den Beilagenanlegern 6 und werden von dort den sich in definierten Fächern der Zusammentragbahn 5 befindlichen Dokumenten oder Dokumentengruppen hinzugefügt.

An die Zusammentragbahn 5 schließt sich stromabwärts die Kuvertiereinrichtung 10 an, in der die vom Sammelkanal 7 und von der Zusammentragbahn 5 kommenden Dokumentengruppen (Dokumentenstapel) S in Kuverts eingefügt werden. Jeder Dokumentenstapel S, der im Sammelkanal 7 erzeugt und dem in der Zusammentragbahn 5 ggf. noch zugehörige Beilagen aus den Beilagenanlegern 6 zugeordnet worden sind, stellt dabei den Inhalt einer Postsendung dar, der in der Kuvertiereinrichtung 10 in ein Kuvert eingefügt wird.

Wie der Draufsicht der erfindungsgemäßen Vorrichtung in Fig. 1 zu entnehmen ist, verläuft der linear ausgebildete erste Zufuhrkanal 3, welcher der ersten Zufuhrstation 1 zugeordnet ist, in Verlängerung zu der sich stromabwärts anschließenden Zusammentragbahn 5. Der stromabwärtige Endabschnitt des ersten Zufuhrkanals 3 bildet dabei den Sammelkanal 7, der entsprechend kolinear zu dem linearen ersten Zufuhrkanal 3 und der ebenfalls linear aufgebauten Zusammentragbahn 5 verläuft.

Wie aus der Detaildarstellung von Fig. 2 ersichtlich, verläuft der zweite Zufuhrkanal 4 im oberhalb des ersten Zufuhrkanals 3. Am stromabwärtigen Ende des zweiten Zufuhrkanals 4 werden die zweiten Dokumente b schräg nach unten in Richtung auf den darunter angeordneten ersten Zufuhrkanal 3 geführt und dort mit den in einer Dokumentengruppe S zugeordneten ersten Dokumenten a zur Bildung des Inhalts einer Postsendung zusammen geführt. Hierfür werden die zweiten Dokumente b von oben auf die sich in der ersten Transporteinrichtung 3a befindlichen ersten Dokumente a stapelbildend aufgelegt, um eine Dokumentengruppe S in Form eines Dokumentenstapels auszubilden.

In der Detaildarstellung der Figuren 2 bis 4 sind der erste Zufuhrkanal 3 und der zweite Zufuhrkanal 4 im Detail gezeigt. Der erste Zufuhrkanal 3 weist zum Transport der ersten Dokumente a (bzw. Dokumentengruppen) bewegte Mitnehmer 13, 13' auf, welche paarweise quer zur ersten Transportrichtung v1 nebeneinander liegend angeordnet sind und über eine Transportfläche vorstehen. In der ersten Transportrichtung v1 im Abstand zueinander angeordnete Mitnehmerpaare 13, 13' definieren dabei ein Ablagefach der ersten Transporteinrichtung 3a bzw. des darin übergehenden Sammelkanals 7, in dem die ersten Dokumente a bzw. die im Sammelkanal gesammelten Dokumentengruppen S abgelegt werden. In dem Ausführungsbeispiel der Figur 2 sind im Bereich der ersten Transporteinrichtung 3a drei erste Dokumente (a₁, a₂, a₃) in aufeinanderfolgenden Fächern und im Bereich des Sammelkanals 7 eine gesammelte Dokumentengruppe S als Dokumentenstapel aufgelegt.

In dem zweiten Zufuhrkanal 4 werden die zweiten Dokumente b mittels der zweiten Transporteinrichtung 4a transportiert. Die zweite Transporteinrichtung 4a umfasst ein verdrehtes und angetriebenes Transportband 5, welches die zweiten Dokumente b in Eingriff nimmt, um sie von ihrer ursprünglich horizontalen Lage in eine zumindest im Wesentlichen vertikale Lage und wieder zurück in ihre horizontale Lage zu bringen. Bei dem Transportband 5 kann es sich bspw. um ein Vakuumband handeln, welches die zweiten Dokumente b ansaugt, oder - wie in Figur 2 gezeigt - um einen verschränkten Riemen mit zwei benachbarten Bändern 5a, 5b, zwischen denen die zweiten Dokumente b in Eingriff genommen werden.

Wie aus den Figuren 2 bis 4 ersichtlich, transportiert die zweite Transporteinrichtung 4a die zweiten Dokumente b zunächst zumindest abschnittsweise linear in einer horizontalen Lage in einer zweiten Transportrichtung v2 längs der zweiten Transportgeraden G2 und bringt die zweiten Dokumente b mittels des verdrehten Transportbands 5 anschließend in eine zumindest im Wesentlichen vertikale Lage. In dem Ausführungsbeispiel der Figur 2 sind drei aufeinanderfolgende zweite Dokumente (b₁, b₃, b₃,) gezeigt, wobei sich das stromaufwärtigste dieser Dokumente (b₁) in seiner (ursprünglichen) horizontalen Lage befindet, aus der es von der zweiten Zufuhrstation 2 auf den zweiten Zufuhrkanal 4 übergeben worden ist, und das in Stromrichtung vorausgehende Dokument (b₂) sich in der gedrehten, vertikalen Lage befindet.

Wie aus Figur 2 ersichtlich, ist das Transportband 5 um eine erste Umlenkrolle 6a und um eine zweite Umlenkrolle 6b geführt. Der Außenumfang der ersten Umlenkrolle 6a liegt dabei auf der zweiten Transportgeraden G2 und der Außenumfang der zweiten Umlenkrolle 6b auf der dritten Transportgeraden G3. Dadurch wird ein vom verdrehten Transportband 5 in eine vertikale Lage gedrehtes Dokument (bspw. das Dokument b₂) von der Transporteinrichtung 4a während des Transports längs des zweiten Zufuhrkanals 4 von der zweiten Transportrichtung v2 (welche entlang der zweiten Transportgeraden G2 verläuft) zunächst im Wesentlichen senkrecht in Richtung auf den daneben liegenden zweiten Zufuhrkanal 3 umgelenkt. Anschließend erfolgt eine weitere Umlenkung um einen Umlenkwinkel von bevorzugt mehr als 90° und insb. ca. 120°, wobei sich das zweite Dokument b während dieser Umlenkungen immer in der vertikalen Lage befindet. Die zweite Umlenkung erfolgt dabei in eine dritte Transportrichtung v3, welche entlang der dritten Transportgeraden G3 verläuft. Diese dritte Transportrichtung v3 ist zumindest im Wesentlichen parallel zur ersten Transportrichtung v1, in der die ersten Dokumente a längs des ersten Zufuhrkanals 3 transportiert werden. Während des Transports der zweiten Dokumente b in der dritten Transportrichtung v3 werden diese wieder durch das verdrehte Transportband 5 zurück in eine horizontale Lage verdreht.

Am stromabwärtigen Bereich ist das Transportband 5 um eine dritte Umlenkrolle 6c geführt, welche in der dritten Transportrichtung v3 stromabwärts der zweiten Umlenkrolle 6b angeordnet ist und das Transportband 5 schräg nach unten in Richtung der ersten Transporteinrichtung 3a umlenkt. Das stromabwärtige Ende des Transportband 5 ist dabei knapp oberhalb der ersten Transporteinrichtung 3a positioniert. Durch diese Führung des Transportbands 5 werden die zweiten Dokumente b schließlich aus der dritten Transportrichtung v3 umgelenkt und (in horizontaler Lage befindlich) nach unten in Richtung auf die darunter liegende erste Transporteinrichtung 3a geleitet. In Figur 2 ist mit b₃ ein zweites Dokument gezeigt, das (in horizontaler Lage) aus der dritten Transportrichtung v3 nach unten umgelenkt und in Richtung der ersten Transporteinrichtung 3a geleitet wird. Die zweiten Dokumente b verlassen dann das stromabwärtige Ende des Transportbands 5, um in dem Sammelkanal 7 in einem Fach abgelegt zu werden, bspw. auf einem bereits in dem Fach liegenden ersten Dokument a oder einer Gruppe von ersten Dokumenten. Auf diese Weise werden die ersten Dokumente a aus der ersten Zufuhrstation 1 und die zweiten Dokumente b aus der zweiten Zufuhrstation 2 lagekonform (d.h. miteinander in Deckung) zusammen geführt, um eine zusammengehörende Dokumentengruppe S zu bilden. Zweckmäßig werden die eine zusammengehörende Dokumentengruppe S bildenden Dokumente dabei in einem Fach der Sammelstation 7 zu einem Dokumentenstapel aufgestapelt.

Die Erfindung ist nicht auf die hier zeichnerisch dargestellte Ausführungsform beschränkt. So kann bspw. die zweite Transportgerade G2 auch winklig zur ersten Transportgeraden G1 bzw. zur dritten Transportgeraden G3 verlaufen. Weiterhin ist es möglich, die zweiten Dokumente b nach dem Verlassen der zweiten Zufuhrstation 2 zunächst noch nicht entlang der zweiten Transportgeraden G2 sondern in einer anderen Transportrichtung zu transportieren und dann erst in die zweite Transportrichtung v2 entlang der zweiten Transportgeraden G2 umzulenken. Es ist auch nicht zwingend, dass die zweiten Dokumente b in dem zweiten Zufuhrkanal in der zweiten und dritten Transportrichtung v2 bzw. v3 in einer horizontalen und zur Transportebene des ersten Zufuhrkanals parallelen Ebene transportiert werden, d.h. die zweite Transportrichtung v2 und/oder die dritte Transportrichtung v3 können auch nicht-parallel zur ersten Transportrichtung v1 verlaufen. Ferner kann die Transporteinrichtung des ersten Zufuhrkanals 3 anders ausgebildet sein als hier dargestellt und bspw. einen oder mehrere angetriebene Transportriemen umfassen, insbesondere ein Vakuumband, auf denen die ersten Dokumente a aufgelegt und in der ersten Transportrichtung v1 transportiert werden.

## Patentansprüche

1. Vorrichtung zur Erzeugung von Postsendungen mit
- einem linear ausgebildeten ersten Zufuhrkanal (3) zur Zufuhr von ersten Dokumente (a) einer Postsendung, mit einer ersten Transporteinrichtung (3a), welche die ersten Dokumenten (a) entlang einer ersten Transportrichtung (v1) längs einer ersten Transportgeraden (G1) transportiert,
- einer Identifikationseinrichtung zum Identifizieren der ersten Dokumente (a),
- einem zweiten Zufuhrkanal (4) zur Zufuhr von zweiten Dokumenten (b) einer Postsendung,
- einer Identifikationseinrichtung zum Identifizieren der zweiten Dokumente (b),
- einem stromabwärts des ersten Zufuhrkanals (3) und stromabwärts des zweiten Zufuhrkanals (4) angeordneten Sammelkanal (7) zur Aufnahme von ersten Dokumenten (a) oder Gruppen von ersten Dokumenten aus dem ersten Zufuhrkanal (3) und/oder von zweiten Dokumenten (b) oder Gruppen von zweiten Dokumenten aus dem zweiten Zufuhrkanal (4), wobei die im Sammelkanal (7) aufgenommenen Dokumente als Dokumentengruppe (S) gesammelt werden, wobei jede Dokumentengruppe (S) den Inhalt einer Postsendung bildet,
- einer stromabwärts des Sammelkanal (7) angeordneten Kuvertiereinrichtung (10), in der die vom Sammelkanal (7) kommenden Dokumentengruppen (S) in ein Kuvert eingefügt werden,
**dadurch gekennzeichnet, dass** die zweite Transporteinrichtung (4a) die zweiten Dokumente (b) ohne Anhalten der Dokumente von einer zweiten Transportrichtung (v2) längs einer zweiten Transportgeraden (G2) in eine dritte Transportrichtung (v3) längs einer dritten Transportgeraden (G3) umlenkt.

2. Vorrichtung nach Anspruch 1, **dadurch gekennzeichnet, dass** die zweite Transporteinrichtung (4a) die zweiten Dokumente (b) zunächst zumindest abschnittsweise linear in einer horizontalen Lage längs der zweiten Transportgeraden (G2) transportiert, die zweiten Dokumente (b) in eine zumindest im Wesentlichen vertikale Lage bringt, dann von der zweiten Transportrichtung (v2) in die dritte Transportrichtung (v3) umlenkt und schließlich wieder zurück in eine horizontale Lage bringt.

3. Vorrichtung nach Anspruch 1 oder 2, **dadurch gekennzeichnet, dass** die dritte Transportgerade (G3) parallel und im Abstand zur ersten Transportgeraden (G1) verläuft.

4. Vorrichtung nach Anspruch 1 oder 2, **dadurch gekennzeichnet, dass** die zweite Transportgerade (G2) und die dritte Transportgerade (G3) in einer Ebene und insb. im Wesentlichen parallel zueinander verlaufen.

5. Vorrichtung nach einem der voranstehenden Ansprüche, **dadurch gekennzeichnet, dass** die dritte Transportgerade (G3) oberhalb und in einem vertikalen Abstand (d) zur ersten Transportgeraden (G1) verläuft.

6. Vorrichtung nach einem der voranstehenden Ansprüche, **dadurch gekennzeichnet, dass** die zweite Transporteinrichtung (4a) ein verdrehtes Transportband (5) aufweist, welches die zweiten Dokumente (b) in Eingriff nimmt, um sie von einer horizontalen Lage in eine zumindest im Wesentlichen vertikale Lage und wieder zurück in eine horizontalen Lage zu bringen.

7. Vorrichtung nach Anspruch 6, **dadurch gekennzeichnet, dass** es sich bei dem Transportband (5) um einen verschränkten Riemen mit zwei benachbarten Bändern (5a, 5b) handelt, zwischen denen die zweiten Dokumente (b) in Eingriff genommen werden.

8. Vorrichtung nach einem der voranstehenden Ansprüche, **dadurch gekennzeichnet, dass** die Identifikationseinrichtung zum Identifizieren der ersten Dokumente (a) durch eine dem ersten Zufuhrkanal (3) zugeordnete Leseeinrichtung zum Lesen der ersten Dokumente (a) und/oder die Identifikationseinrichtung zum Identifizieren der zweiten Dokumente (b) durch eine dem zweiten Zufuhrkanal (3) zugeordnete Leseeinrichtung zum Lesen der zweiten Dokumente (b) gebildet ist.

9. Vorrichtung nach einem der voranstehenden Ansprüche, **dadurch gekennzeichnet, dass** dem ersten Zufuhrkanal (3) eine erste Sammelstation zugeordnet ist, welche die ersten Dokumente (a) zu Gruppen von ersten Dokumenten gruppiert und/oder wobei dem zweiten Zufuhrkanal (4) eine zweite Sammelstation zugeordnet ist, welche die zweiten Dokumente (b) zu Gruppen von zweiten Dokumenten gruppiert und dass die in dem Sammelkanal (7) gesammelten Dokumentengruppen (S) jeweils erste Dokumente (a) und zweite Dokumente (b) enthalten, wobei die ersten Dokumente und die zweiten Dokumente verschieden sind.

10. Verfahren zur Erzeugung von Postsendungen mit folgenden Schritten:
- Zufuhr von ersten Dokumenten (a) oder einer Gruppe von ersten Dokumenten längs eines ersten Zufuhrkanals (3),
- Identifizieren wenigstens eines der ersten Dokumente (a) mit einer Identifikationseinrichtung, insbesondere mit einer dem ersten Zufuhrkanal (3) zugeordneten Leseeinrichtung,
- Zufuhr von zweiten Dokumenten (b) oder einer Gruppen von zweiten Dokumenten entlang eines zweiten Zufuhrkanals (4),
- Identifizieren wenigstens eines der zweiten Dokumente (b) mit einer Identifikationseinrichtung, insbesondere mit einer dem zweiten Zufuhrkanal (4) zugeordneten Leseeinrichtung,
- Übergabe der ersten Dokumente (a) oder der Gruppen von ersten Dokumenten von dem ersten Zufuhrkanal (3) auf einen stromabwärts des ersten Zufuhrkanals (3) angeordneten Sammelkanal (7) ohne Anhalten der ersten Dokumente (a),
- Übergabe der zweiten Dokumente (b) oder der Gruppen von zweiten Dokumenten von dem zweiten Zufuhrkanal (4) auf den stromabwärts des zweiten Zufuhrkanals (2) angeordneten Sammelkanal (7) ohne Anhalten der zweiten Dokumente (b), wobei die im Sammelkanal (7) aufgenommenen Dokumente als Dokumentengruppe (S) gesammelt werden, jede Dokumentengruppe (S) den Inhalt einer Postsendung bildet und erste Dokumente (a) und/oder zweite Dokumente (b) enthält,
- Weiterleiten der Dokumentengruppe (S) in dem Sammelkanal (7) an eine stromabwärts des Sammelkanal (7) angeordnete Kuvertiereinrichtung (10),
- in der Kuvertiereinrichtung (10) Einfügen der vom Sammelkanal (7) kommenden Dokumentengruppe (S) in ein Kuvert zur Bildung einer Postsendung.

11. Verfahren nach Anspruch 10, **dadurch gekennzeichnet, dass** die ersten Dokumente (a) und die zweiten Dokumente (b) in den Zufuhrkanälen (3, 4) und in dem Sammelkanal (7) bis zur Übergabe an die Kuvertiereinrichtung (10) ohne Anhalten der Dokumente transportiert werden.

12. Verfahren nach Anspruch 10 oder 11, wobei die ersten Dokumente (a) in dem ersten Zufuhrkanal (3) von einer ersten Transporteinrichtung (3a) linear längs einer ersten Transportrichtung (v1) transportiert und die zweiten Dokumente (b) in dem zweiten Zufuhrkanal (4) ohne Anhalten der Dokumente von einer zweiten Transportrichtung (v2) längs einer zweiten Transportgeraden (G2) in eine dritte Transportrichtung (v3) längs einer dritten Transportgeraden (G3) umgelenkt werden.

13. Verfahren nach Anspruch 12, wobei die zweiten Dokumente (b) von der zweiten Transporteinrichtung (4a) zunächst linear in einer horizontalen Lage längs der zweiten Transportgeraden (G2) transportiert und anschließend in eine zumindest im Wesentlichen vertikale Lage gebracht und dann von der zweiten Transportrichtung (v2) in die dritte Transportrichtung (v3) umgelenkt und schließlich wieder zurück in eine horizontale Lage gebracht werden.
